# EUROPÄISCHE PATENTSCHRIFT

(11) **EP 3 017 285 B1**
(45) Veröffentlichungstag und Bekanntmachung des Hinweises auf die Patenterteilung: **30.03.2022**
(21) Anmeldenummer: 14737146.2
(22) Anmeldetag: 27.06.2014
(51) Int. Cl.: G01N 1/28, G01N 23/223

(54) **VERFAHREN SOWIE EINE VORRICHTUNG ZUR HERSTELLUNG EINER TABLETTE**
METHOD AND DEVICE FOR PRODUCING A TABLET
PROCÉDÉ ET DISPOSITIF DE PRODUCTION D'UN COMPRIMÉ

(30) Priorität: 03.07.2013 DE 102013106998
(43) Veröffentlichungstag der Anmeldung: 11.05.2016
(73) Patentinhaber: thyssenkrupp Industrial Solutions AG, 45143 Essen (DE)
(72) Erfinder: BORNEFELD, Marc, 33617 Bielefeld (DE); TEUTENBERG, Reinhard, 59427 Unna (DE); SCHNEBERGER, Jürgen, 59320 Ennigerloh (DE)
(74) Vertreter: thyssenkrupp Intellectual Property GmbH
(86) Internationale Anmeldenummer: PCT/EP2014/001766
(87) Internationale Veröffentlichungsnummer: WO 2015/000571

(56) Entgegenhaltungen:
- EP-A1- 0 867 526
- EP-A2- 1 052 500
- WO-A1-89/04475
- DE-A1-102004 050 720
- FR-A1- 2 248 479
- JP-A- S5 931 439
- US-A- 5 257 302
- US-A1- 2007 186 587

## Beschreibung

Die Erfindung betrifft ein Verfahren sowie eine Vorrichtung zur Herstellung einer Tablette, die vorzugsweise für eine spätere Analyse zur Stoffbestimmung vorzugsweise in der Grundstoffindustrie vorgesehen ist. Es ist bekannt, Tabletten als Presstabletten in der Weise herzustellen, dass das Tablettenmaterial aufgemahlen und unter Anwendung von Druck und/oder Bindemittel zur Tablette weiterverarbeitet wird. Ein Verfahren dieser Art setzt voraus, dass das Tablettenmaterial vor dem Aufmahlen bereits in einer für die fertige Tablette geeigneten stofflichen Konsistenz vorliegt.

Es ist ferner bekannt, Tabletten aus einer Schmelze herzustellen. Dabei wird das Tablettenmaterial aufgeschmolzen und die Schmelze in eine Tablettenform gegossen und darin abgekühlt. Ein solches Abkühlen unter gleichzeitiger Formgebung ist jedoch verfahrenstechnisch sowie in apparativer Hinsicht aufwendig. So muss die Abkühlung einer Schmelztablette unter sehr kontrollierten Bedingungen erfolgen, da ein zu rasches Abkühlen zum Brechen der Tablette führt, während bei einem zu langsamen Abkühlen die Schmelze kristallisiert, so dass die Tablette ebenfalls ihre Festigkeit verliert.

Beide Verfahren sind in der US 5,257,302 beschrieben. Die US 5,257,302 beschreibt zudem ein Verfahren, bei dem ein Probenmaterial für eine anschließende Analyse aufbereitet wird, indem dieses nach verschiedenen Zwischenschritten soweit erhitzt wird, bis sich eine glasige Schmelze ausbildet, die anschließend mittels Drucklufts gekühlt wird. Daraufhin scheint ein Vermahlen und anschließend ein Verpressen des aufgeschmolzenen und wieder erstarrten Produkts in Formkörper, die bei einer anschließenden Röntgenfluoreszenzanalyse zum Einsatz kommen sollen, vorgesehen zu sein.

Der Erfindung liegt die Aufgabe zugrunde, ein Verfahren sowie eine Vorrichtung zur Herstellung einer vorzugsweise für eine spätere Analyse zur Stoffbestimmung vorgesehenen Tablette zu schaffen, die in der verfahrenstechnischen Durchführung und im erforderlichen apparativen Aufwand wesentlich einfacher als die bisher bekannten Verfahren und Vorrichtungen sind.

Diese Aufgabe wird erfindungsgemäß für das Verfahren durch die Merkmale des Anspruches 1 und für die Vorrichtung durch die Merkmale des Anspruches 7 gelöst.

Zweckmäßige Ausgestaltungen der Erfindung sind Gegenstand der Unteransprüche 2 bis 6 und 8 bis 9.

Während bei bisher bekannten Verfahren zur Herstellung einer Tablette aus einem geschmolzenen Stoffstrom die Schmelze definiert in eine Form gegossen wird und darin zu einer Tablette abkühlt, ist für das erfindungsgemäße Verfahren ein ungeformtes Abkühlen des geschmolzenen Stoffstromes charakteristisch. Das glasige Material erstarrt hierbei zu einer zufälligen Form und wird anschließend gemahlen und zu einer Presstablette gepresst. Die Geschwindigkeit des ungeformten Abkühlens des geschmolzenen Stoffstromes ist dabei nicht kritisch, was das ganze Verfahren wesentlich vereinfacht.

Der Stoffstrom oder Anteile des Stoffstroms können beispielsweise natürliche Gesteine, wie z.B. Silikaten, Karbonaten, Sulfate, Sulfide, Salze, Oxide, etc., oder Materialien aus industriellen Prozessprodukten, wie Schlacken, Flugaschen, Legierungen oder andere Metallverbindungen, umfassen.

Unter einem glasigen Material bzw. einer glasigen Struktur wird insbesondere ein amorphes Material verstanden, das nach dem Abkühlen aus der Schmelze keine kristalline Struktur aufweist. Ein solches glasiges Material wird beispielsweise durch ein schnelles Abkühlen der Schmelze erreicht, wobei eine Kristallisation des Materials verhindert wird. Die kristallographischen Eigenschaften des Stoffstroms bleiben vorzugsweise nach dem Abkühlen des Stoffstroms erhalten, sodass nach dem Schritt c) des Vermahlens der vermahlene Stoffstrom und nach dem Schritt d) des Pressens zumindest eines Teils des vermahlenen Stoffstromes zu einer Presstablette die Presstablette eine glasige Struktur aufweist. Sowohl durch das Vermahlen des abgekühlten Stoffstroms als auch durch das sich an das Vermahlen anschließende Verpressen des Stoffstroms werden die kristallographischen Eigenschaften des Stoffstroms nicht verändert und die glasige Struktur bleibt erhalten.

Durch die glasige, amorphe Struktur der Presstablette wird eine anschließende Analyse beispielsweise der Zusammensetzung der Tablette ermöglicht. Des Weiteren ist eine solche Tablette mit einer glasigen Struktur durch das vorangegangene Vermahlen und Verpressen wesentlich robuster, als eine aus der Schmelze abgekühlte glasförmige Tablette.

Man erhält auf diese Weise ohne Formgebung der Schmelze, nämlich aus dem ungeformt abgekühlten, zuvor geschmolzenen Stoffstrom, eine Presstablette, mit der sich in überraschender Weise die gleichen analytischen Resultate erzielen lassen, wie mit einer klassischen Schmelztablette der eingangs geschilderten, bekannten Art. Der bisher von der Fachwelt für erforderlich gehaltene Schritt einer Formung der Tablette aus der Schmelze erwies sich bei den der Erfindung zugrunde liegenden Versuchen als nicht notwendig. Der erfindungsgemäße Wegfall einer aufwendigen Formgebung unter gleichzeitiger Abkühlung führt zu einer wesentlichen Vereinfachung der Tablettenherstellung in verfahrenstechnischer und apparativer Hinsicht.

Das erfindungsgemäße Verfahren kombiniert damit die Technik des Herstellens einer Schmelze, einer Abkühlung der Schmelze ohne aufwendige Formgebung sowie einer Vermahlung mit der Technik des Pressens einer Presstablette. Das neue Verfahren ermöglicht eine wesentlich einfachere Handhabung der Presstablette im Vergleich zu klassischen Schmelztabletten in automatisierter Umgebung. Eine nach dem erfindungsgemäßen Verfahren hergestellte Presstablette ist ferner deutlich robuster als eine nach dem bekannten Verfahren hergestellte Schmelztablette. Die erfindungsgemäße Presstablette ist in der Handhabung, insbesondere durch einen Roboter, sehr unempfindlich und zerbricht nicht bei richtiger Präparation.

Ein weiterer Vorteil des erfindungsgemäßen Verfahrens besteht im Fortfall der für die Fertigung der bekannten Schmelztabletten notwendigen zusätzlichen Kokillen (Abgießschalen) aus Platin.

Der ungeformt abgekühlte Stoffstrom beziehungsweise das erstarrte glasige Material wird gemäß einer zweckmäßigen Ausgestaltung des erfindungsgemäßen Verfahrens auf eine Korngröße < 5 mm, vorzugsweise < 1 mm, vermahlen.

Bei und/oder nach dem Schmelzvorgang kann eine Homogenisierung der Schmelze, vorzugsweise durch Rühren, Rütteln und/oder Schütteln, vorgenommen werden.

Gemäß einem nicht erfindungsgemäßen Beispiel kann die Abkühlung des geschmolzenen Stoffstromes durch ein Kühlgas und/oder eine Kühlflüssigkeit, vorzugsweise mittels einer metallischen Oberfläche, etwa einer gekühlten oder ungekühlten Metallplatte, erfolgen.

Die Vermahlung besteht zweckmäßig wenigstens aus einer Vormahlung und einer Hauptmahlung, wobei die Mahldauer der Vormahlung mehr als 30 s, vorzugsweise mehr als 150 s, insbesondere mehr als 280 s beträgt und wobei die Hauptmahlung mehr als 25 s und weniger als 200 s dauert. Dabei können bei der Vormahlung und/oder bei der Hauptmahlung eine oder mehrere Mahlhilfen eingesetzt werden.

Für die Vermahlung findet zweckmäßig eine Feinstmühle mit einer Drehzahl zwischen 650 und 1850 U/min Verwendung.

Erfindungsgemäß kann das Kühlaggregat durch Walzen oder Kugeln gebildet werden und zugleich zur Zerkleinerung des ungeformten, geschmolzenen Stoffstromes dienen.

Gemäß einem nicht erfindungsgemäßen Beispiel kann das Kühlaggregat auch durch Mittel gebildet werden, die einen Gas- und/oder Flüssigkeitsschleier erzeugen, durch den der ungeformte, geschmolzene Stoffstrom hindurchtritt.

Die Feinstmühle kann zweckmäßig durch eine Scheibenschwingmühle, eine Kugelmühle, eine Walzenmühle oder eine Kombination dieser Mühlentypen gebildet werden.

Die Presse kann als Stößelpresse ausgebildet sein.

Die nach dem erfindungsgemäßen Verfahren hergestellte Presstablette ist in der Regel für eine spätere Analyse zur Stoffbestimmung vorgesehen. Sie wird dazu einer geeigneten Analyseeinrichtung, vorzugsweise einer XRF-Analyseeinrichtung zugeführt.

Die chemische Analytik mittels Röntgenfluoreszenzanalyse (XRF) an Presstabletten ist prinzipiell an allen Feststoffen möglich. Organische Substanzen kommen allerdings kaum in Betracht, da sie in aller Regel durch die hohen Temperaturen beim Schmelzvorgang verbrennen würden.

Geschmolzen wird grundsätzlich eine Mischung aus Probenmaterial und Flussmittel. Das Massenverhältnis zwischen Flussmittel und Probenmaterial ist über alle Proben hinweg konstant und kann zwischen 1:2 und 20:1 betragen. Vorzugsweise ist von einem Verhältnis zwischen 2:1 und 6:1 auszugehen.

Die chemische Zusammensetzung ändert sich durch den Schmelzvorgang und das Abkühlen nicht.

Durch das Flussmittel ist die Schmelztemperatur unabhängig von dem Probenmaterial. Meist beträgt die Schmelztemperatur der Mischung ca. 850 - 1500°C, insbesondere 1050 -1100°C.

Die Abkühlung bis auf Raumtemperatur dauert im Allgemeinen 4-8 Minuten.

Zur weiteren Erläuterung der Erfindung werden im Folgenden die fünf Schritte zur Herstellung einer Presstablette über eine Schmelze beschrieben.
1. Dosierung der Materialien:
   Über eine Dosierungsvorrichtung (z.B. eine Rüttelrinne) wird das Probenmaterial sowie ein Flussmittel (Lithiumtetraborat, Spectromelt) dosiert. Das Flussmittel umfasst beispielsweise Zusatzstoffe, wie LiBr. Die Einwaage sollte 6-15g betragen, wobei das Verhältnis zwischen Flussmittel und Probenmaterial über alle Proben konstant gehalten wird. Das Gemisch wird in einen Tiegel, vorzugsweise aus Platin, Graphit, Korund oder einer anderen geeigneten Keramik, gegeben.
   Das Flussmittel kann tablettenförmig zugegeben werden.
   Das Gemisch kann vor dem Schmelzen vorgemahlen werden, um eine bessere Durchmischung von Probenmaterial und Flussmittel zu erreichen.
2. Schmelzen:
   Das dosierte Gemisch wird in einem Ofen (etwa einem Induktionsofen oder Muffelofen) oder über einer Gasflamme geschmolzen. Zum Homogenisieren der Schmelze kann eine geeignete Vorrichtung, insbesondere eine Rühr-, Rüttel- oder Schüttelvorrichtung, eingesetzt werden.
3. Abkühlen:
   Die Schmelze wird zügig abgekühlt, etwa nach einer der folgenden Methoden:
      - Gemäß einem nicht erfindungsgemäßen Beispiel, dem Ausgießen der Schmelze auf eine gekühlte Metallplatte, an die eine Vorrichtung angeschlossen wird, die die abgekühlte Schmelze durch einen mechanischen Impuls von der Platte löst und diese anschließend reinigt. Sofern erforderlich, wird unterhalb der Metallplatte eine Vorrichtung zur Zerkleinerung von Schmelzbrocken vorgesehen.
      - Erfindungsgemäß dem Ausgießen der Schmelze in eine kleine Walzenmühle ("Mini-Polycom"). Durch die Rotation der Walzen werden diese und die Schmelze gekühlt.
      - Gemäß einem nicht erfindungsgemäßen Beispiel, dem Ausgießen der Schmelze in eine Kühlflüssigkeit.
   Falls erforderlich, werden die gröberen Partikel der abgekühlten Schmelze auf eine Korngröße < 5 mm gebrochen.
4. Herstellung einer Presstablette:
   Die erkaltete Schmelze wird in eine Feinmühle gegeben. Eine Dosierung ist nicht unbedingt erforderlich. Die Vermahlung kann aus einer Vormahlung und einer Hauptmahlung oder aus einem einzigen Mahlschritt bestehen. Die Drehzahl der Feinmühle liegt zwischen 650 und 1850 U/min.
   Bei genügend Probenmaterial wird eine Vorprobe definiert, die vor der eigentlichen Probe in der Mühle gemahlen und verworfen wird. Auf diese Weise wird eine mögliche Kontamination durch vorangegangenes Probenmaterial vermieden.
   Die Vermahlung kann unter Zugabe von Mahlhilfen durchgeführt werden.
5. Pressen des Mahlgutes zu einer Presstablette.

Die Schritte 4 und 5 können entweder mittels einer kombinierten Mahl- und Presseinrichtung oder unter Verwendung einer Feinmühle und einer Tablettenpresse durchgeführt werden. Im letzteren Fall geschieht der Materialtransport von der Feinmühle zur Tablettenpresse beispielsweise durch einen Roboter oder ein Förderband.

## Patentansprüche

1. Verfahren zur Herstellung einer Tablette, die vorzugsweise für eine spätere Analyse zur Stoffbestimmung vorgesehen ist, wobei
a) ein Stoffstrom geschmolzen wird,
b) der geschmolzene Stoffstrom ungeformt zu einem glasigen Material abgekühlt wird,
c) das erstarrte glasige Material anschließend vermahlen wird,
d) und wenigstens ein Teil des vermahlenen Materials zu einer Presstablette gepresst wird,
**dadurch gekennzeichnet,**
**dass** das Abkühlen des geschmolzenen Stoffstroms mittels Ausgießen in eine kleine Walzenmühle erfolgt, die zugleich zur Zerkleinerung des ungeformten, geschmolzenen Stoffstromes dient,
und **dass** das anschließende Vermahlen durch eine Feinmühle durchgeführt wird.

2. Verfahren nach Anspruch 1, **dadurch gekennzeichnet, dass** das glasige Material auf eine Korngröße < 5 mm zerkleinert wird.

3. Verfahren nach Anspruch 1, **dadurch gekennzeichnet, dass** bei und/oder nach dem Schmelzvorgang eine Homogenisierung der Schmelze, vorzugsweise durch Rühren, Rütteln und/oder Schütteln, vorgenommen wird.

4. Verfahren nach Anspruch 1, **dadurch gekennzeichnet, dass** die Vermahlung wenigstens aus einer Vormahlung und einer Hauptmahlung besteht, wobei die Mahldauer der Vormahlung mehr als 30 s, vorzugsweise mehr als 150 s, insbesondere mehr als 280 s beträgt und wobei die Mahldauer der Hauptmahlung mehr als 25 s und weniger als 200 s beträgt.

5. Verfahren nach Anspruch 1, **dadurch gekennzeichnet, dass** bei der Vermahlung eine Feinstmühle mit einer Drehzahl zwischen 650 und 1850 U/min Verwendung findet.

6. Verfahren nach Anspruch 4, **dadurch gekennzeichnet, dass** bei der Vormahlung und/oder bei der Hauptmahlung eine Mahlhilfe Verwendung findet.

7. Vorrichtung zur Herstellung einer Tablette, die vorzugsweise für eine spätere Analyse zur Stoffbestimmung vorgesehen ist, **gekennzeichnet durch**
a) ein Schmelzaggregat zum Schmelzen eines Stoffstromes,
b) ein Kühlaggregat zum Abkühlen des ungeformten, geschmolzenen Stoffstromes, wobei das Kühlaggregat derart ausgebildet ist, dass der abgekühlte Stoffstrom ein glasiges Material umfasst,
c) eine Feinstmühle zum Vermahlen des erstarrten, glasigen Materials,
d) sowie eine Presse zur Herstellung einer Presstablette aus wenigstens einem Teil des vermahlenen Materials, **gekennzeichnet durch** eine Walzenmühle als Kühlaggregat, zum Abkühlen des geschmolzenen Stoffstroms mittels Ausgießen in die Walzenmühle, die zugleich zur Zerkleinerung des ungeformten, geschmolzenen Stoffstromes dient.

8. Vorrichtung nach Anspruch 7, **dadurch gekennzeichnet, dass** die Feinstmühle durch eine Scheibenschwingmühle, eine Kugelmühle, eine Walzenmühle oder eine Kombination dieser Mühlentypen gebildet wird.

9. Vorrichtung nach Anspruch 7, **dadurch gekennzeichnet, dass** die Presse als Stößelpresse ausgebildet ist.

## Claims

1. Method for producing a pellet preferably intended for subsequent chemical analysis,
wherein said method comprises
a) melting a material stream,
b) shapelessly cooling the molten material stream to obtain a glassy material,
c) subsequently grinding the solidified glassy material
d) and pressing at least some of the ground material to obtain a pressed pellet,
**characterized in that**
the cooling of the molten material stream is achieved by pouring into a small roller mill which simultaneously serves to comminute the unshaped molten material stream
and **in that** the subsequent grinding is performed by means of a fine mill.

2. Method according to Claim 1, **characterized in that** the glassy material is comminuted to a grain size of < 5 mm.

3. Method according to Claim 1, **characterized in that** the melt is homogenized during and/or after the melting operation, preferably by stirring, shaking and/or agitating.

4. Method according to Claim 1, **characterized in that** the grinding comprises at least a pregrinding and a main grinding, wherein the pregrinding has a duration of more than 30 seconds, preferably more than 150 seconds, in particular more than 280 seconds and wherein the main grinding has a duration of more than 25 seconds and less than 200 seconds.

5. Method according to Claim 1, **characterized in that** the grinding employs a superfine mill operating at between 650 and 1850 rpm.

6. Method according to Claim 4, **characterized in that** a grinding aid is employed in the pregrinding and/or the main grinding.

7. Apparatus for producing a pellet preferably intended for subsequent chemical analysis, **characterized by**
a) a melting assembly for melting a material stream,
b) a cooling assembly for cooling the unshaped molten material stream, wherein the cooling assembly is configured such that the cooled material stream comprises a glassy material,
c) a superfine mill for grinding the solidified glassy material
d) and a press for producing a pressed pellet from at least some of the ground material stream,
**characterized by** a roller mill as the cooling assembly for cooling the molten material stream by pouring into the roller mill which simultaneously serves to comminute the unshaped molten material stream.

8. Apparatus according to Claim 7, **characterized in that** the superfine mill comprises a vibratory disk mill, a ball mill, a roller mill or a combination of these mill types.

9. Apparatus according to Claim 7, **characterized in that** the press is a ram press.

## Revendications

1. Procédé pour fabriquer une pastille, qui est de préférence prévue pour une analyse ultérieure pour déterminer la matière, dans lequel
a) un courant de matière est fondu,
b) le courant de matière fondu est refroidi informe en un matériau vitreux,
c) le matériau vitreux solidifié est ensuite broyé,
d) et au moins une partie du matériau broyé est pressée en un comprimé,
**caractérisé en ce que**
le refroidissement du courant de matière fondu a lieu par versement dans un petit broyeur à cylindres, qui sert en même temps à broyer le courant de matière fondu informe, et **en ce que** le broyage ultérieur est réalisé par un broyeur fin.

2. Procédé selon la revendication 1, **caractérisé en ce que** le matériau vitreux est broyé à une granulométrie < 5 mm.

3. Procédé selon la revendication 1, **caractérisé en ce que**, pendant et/ou après l'opération de fusion, une homogénéisation de la masse fondue, de préférence par agitation, vibrage et/ou secouage, est réalisée.

4. Procédé selon la revendication 1, **caractérisé en ce que** le broyage est constitué au moins d'un pré-broyage et d'un broyage principal, la durée de broyage du pré-broyage étant supérieure à 30 s, de préférence supérieure à 150 s, en particulier supérieure à 280 s, et la durée de broyage du broyage principal étant supérieure à 25 s et inférieure à 200 s.

5. Procédé selon la revendication 1, **caractérisé en ce que**, lors du broyage, un broyeur ultrafin ayant une vitesse de rotation comprise entre 650 et 1 850 tr/min est utilisé.

6. Procédé selon la revendication 4, **caractérisé en ce qu'**un auxiliaire de broyage est utilisé lors du pré-broyage et/ou du broyage principal.

7. Dispositif pour fabriquer une pastille, qui est de préférence prévue pour une analyse ultérieure pour déterminer la matière, **caractérisé par**
a) une unité de fusion pour faire fondre un courant de matière,
b) une unité de refroidissement pour refroidir le courant de matière fondu informe, l'unité de refroidissement étant configurée de telle sorte que le courant de matière refroidi comprend un matériau vitreux,
c) un broyeur ultrafin pour broyer le matériau vitreux solidifié,
d) ainsi qu'une presse pour fabriquer un comprimé à partir d'au moins une partie du matériau broyé,
**caractérisé par** un broyeur à cylindres en tant qu'unité de refroidissement pour refroidir le courant de matière fondu par versement dans le broyeur à cylindres, qui sert en même temps à broyer le courant de matière fondu informe.

8. Dispositif selon la revendication 7, **caractérisé en ce que** le broyeur ultrafin est formé par un broyeur vibrant à disques, un broyeur à billes, un broyeur à cylindres ou une combinaison de ces types de broyeurs.

9. Dispositif selon la revendication 7, **caractérisé en ce que** la presse est configurée sous forme de presse à pilon.
